# EUROPEAN PATENT SPECIFICATION

(11) **EP 0 858 927 B1**
(45) Date of publication and mention of the grant of the patent: **27.04.2005**
(21) Application number: 98102373.2
(22) Date of filing: 11.02.1998
(51) Int. Cl.: B60N 2/44, B60N 2/22

(54) **Reclining device**
Neigungsverstellvorrichtung
Dispositif d'inclinaison

(30) Priority: 13.02.1997 JP 2913297; 26.12.1997 JP 35886297
(43) Date of publication of application: 19.08.1998
(73) Proprietor: NHK SPRING CO., LTD., Yokohama-shi (JP)
(72) Inventor: Kidokoro, Hideaki, Kanazawa-ku, Yokohama-shi (JP); Nonomiya, Masaaki, Kanazawa-ku, Yokohama-shi (JP); Sasaki, Akira, Kanazawa-ku, Yokohama-shi (JP)
(74) Representative: Grünecker, Kinkeldey, Stockmair & Schwanhäusser Anwaltssozietät

(56) References cited:
- EP-A- 0 232 192
- EP-A- 0 749 865
- FR-A- 2 530 436
- GB-A- 2 284 987
- US-A- 4 087 885

## Description

The present invention relates to a reclining device adapted for variable setting of the tilt angle of a seat back of an automobile seat, for example.

There are various types of reclining devices. A hinge device described in Jpn. Pat. Appln. KOKOKU Publication No. 3-52965 or US-A-4 523 786 is one such known device. In this device, an internal gear and a latch member are provided on a stationary plate and a movable plate, respectively, and a seat back is locked by causing the latch member to engage the internal gear. According to this prior art, an operating lever is pivotally mounted in a position separate from a shaft, the motion of the lever is transmitted to a cam by means of a link, and the latch member is actuated by means of the cam.

If the axis of rotation of the operating lever is deviated from the center of the shaft, as in the prior art device (Jpn. Pat. Appln. KOKOKU Publication No. 3-52965 or US-A-4 523 786), the motion of the lever must inevitably be transmitted to the cam by means of an intermediate member such as the link. Therefore, the path of transmission of force from the operating lever to the latch member is subject to a substantial load loss or stroke loss.

Accordingly, an internal-gear reclining device 100, such as the one shown in FIG. 12, has been proposed in order to enable the operating lever to transmit operating force thereon to the cam member without any loss. This device 100 comprises a base plate 101, an operating lever 103 rotatable around a shaft 102 fixed to the plate 101, and a movable arm 105 rotatably supported on the shaft 102 and having an internal gear 104. The device 100 further comprises a latch member 111, a cam member 113, a coupling member 114, etc. The latch member 111 is interposed between the base plate 101 and the movable arm 105, and is movable along a groove 110 in the plate 101. The cam member 113 is fitted in a recess 112 in the base plate 101, and is rotatable around the shaft 102. The coupling member 114 serves to transmit the rotary motion of the operating lever 103 to the cam member 113.

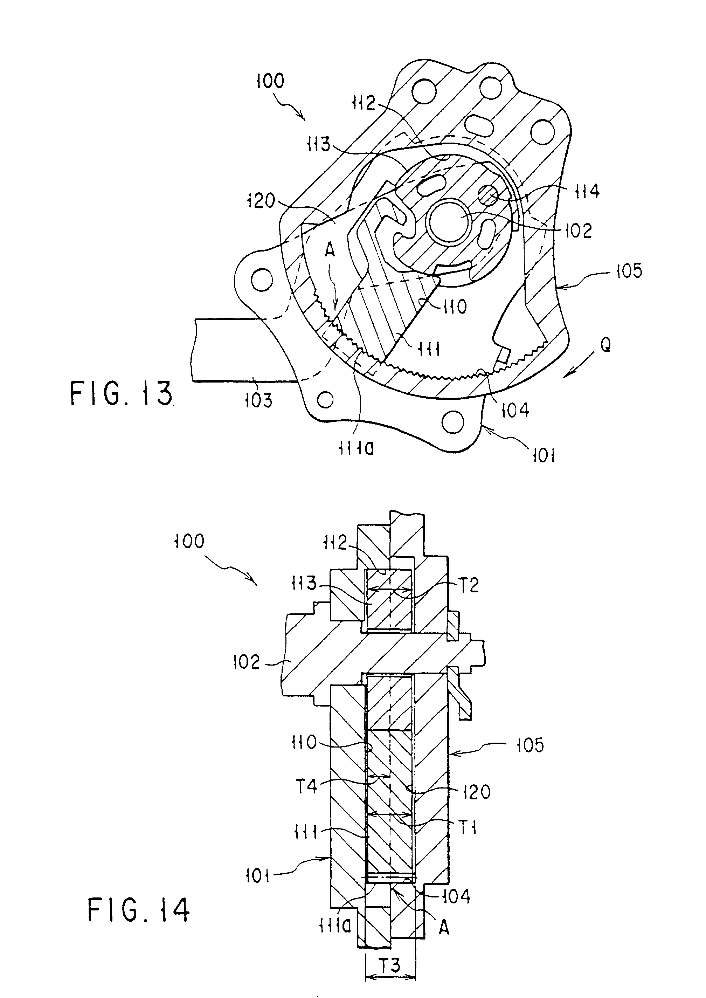

In the reclining device 100, as shown in FIG. 13, a gear portion 111a of the latch member 111 is pressed against the internal gear 104 by the cam member 113 when the operating lever 103 is lowered. As the internal gear 104 engages the gear portion 111a, the movable arm 105 is fixed to the base plate 101, that is, the seat back is fixed (or locked). When the operating lever 103 is pulled up, it rotates around the shaft 102, and at the same time, the cam member 113 rotates around the shaft 102. Thereupon, the cam member 113 shifts its position so that the latch member 111 is disengaged from the internal gear 104. Thus, the movable arm 105 is released from the latch member 111 or unlocked so that it can rotate relatively to the base plate 101.

The reclining device 100 is provided on one side of a seat. In the case of a bilateral-locking recliner, a second reclining device 100' that resembles the reclining device 100 in construction is located on the other side of the seat. The paired reclining devices 100 and 100' are designed so that their respective cam members 113 (only one of which is shown) are linked together by means of a coupling rod 117.

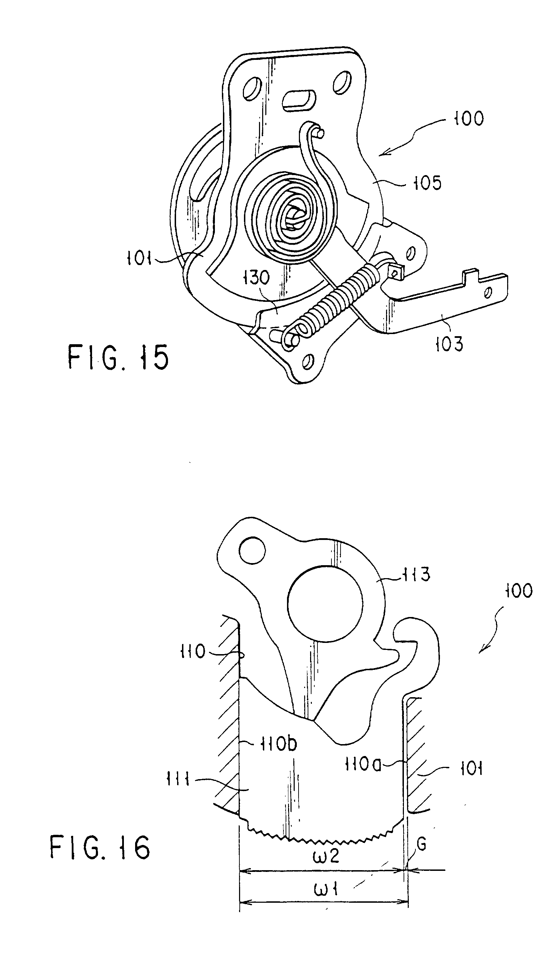

As shown in FIG. 14, the conventional internal-gear reclining device 100 is provided with an offset portion, which includes the groove 110 for holding the left-hand half of the latch member 111 and a recess 112 for holding the left-hand half of the cam member 113. The groove 110 and the recess 112 are obtained by stamping out parts of the base plate 101 to the left-hand side by pressing. On the other hand, a recess 120 for holding the respective right-hand halves of the members 111 and 113 are formed by stamping out part of the movable arm 105. The internal gear 104 is formed on an end of the recess 120. Since the latch member 111 is stamped out of its material by fine blanking, the gear portion 111a extends across the overall thickness of the latch member 111.

In the case where the latch member 111 and the cam member 113 are held between the base plate 101 and the movable arm 105, the thicknesses T1 and T2 of the members 111 and 113 must be approximated to a distance T3 between the respective inner surfaces of the groove 110 and the recess 120, in order to lessen excessive play in the thickness direction of the members 111 and 113. In a mating region A between the internal gear 104 and the gear portion 111a of the latch member 111, therefore, the gear 104 and the portion 111a engage each other for only half the gear thickness of the portion 111a. In other words, about half the thickness of each of the members 111 and 113 is a superfluous thickness, for which the reclining device becomes thicker and heavier in weight, and its material cost is higher.

In the conventional internal-gear reclining device 100, moreover, the pressed portions, such as the groove 110 and the recess 112 of the base plate 101, are large-sized and complicated in shape. Accordingly, the base plate 101 can be molded only by fine blanking, which requires use of more expensive dies than in normal pressing and entails higher costs. If the latch member 111 is too thick, on the other hand, there is a problem that the gear portion 111a, a small module, cannot be stamped out.

Further, load may be concentrated on the mating region A between the internal gear 104 and the latch member 111 when a torque Q (shown in FIG. 13) is applied to the region A in case of a vehicle crash or the like. In some cases, therefore, the mating region A may be lowered in strength.

If a force of inertia from the body of an occupant of the vehicle is applied to the seat back in case of a crash, an inward torsional load, as well as the aforesaid torque Q, is generated in the reclining device 100. This torsional load acts in the direction to separate the base plate 101 and the arm 105 from each other. When the plate 101 and the arm 105 are separated, the depth of engagement between the internal gear 104 and the latch member 111 is reduced, so that the strength of the mating region A is lowered inevitably.

Conventionally, therefore, a bracket 130 is used to prevent the separation between the base plate 101 and the arm 105, as shown in FIG. 15. If this bracket 130 is additionally used in the reclining device 100, however, the weight of the device, as well as the number of its components, increases.

In the conventional reclining device 100 shown in FIG. 16, the groove 110 for holding the latch member 111 includes two parallel surfaces 110a and 110b for guiding the member 111 in sliding motion. In order to enable the member 111 to slide smoothly along the surfaces 110a and 110b, a clearance (gap) G must be defined by the member 111 and the surfaces 110a and 110b. This clearance G is equal to the difference between a width w 2 of the latch member 111 and a distance w 1 between the two surfaces 110a and 110b. In consideration of the dimensional tolerances of the latch member 111 and the base plate 101 and the like, the clearance G should be made considerably large. It has been found, however, that this clearance G may cause excessive play between the plate 101 and the member 111 and make the seat back shaky.

EP 0 749 865 A2 discloses a reclining device comprising a base plate, a horizontal shaft provided on the base plate, a movable arm located adjacent to the base plate, rotatable around the shaft, and having an internal gear, a latch member movable between a locked position in which the latch member is in engagement with the internal gear and an unlocked position in which the latch member is disengaged from the internal gear, a cam member having a shape such as to be able to drive the latch member between the locked position and the unlocked position, and an operating lever for rotating the cam member, wherein the base plate includes a first guide projection and a second guide projection projecting in the thickness direction thereof, the guide projections having opposite guide walls, individually, the movable arm includes an offset portion recessed in the thickness direction thereof, the guide projections get into the offset portion with the base plate and the movable arm joined together, the latch member is held between the inner surface of the offset portion and the base plate and is movable along the guide walls between the locked position and the unlocked position, and the cam member is also held between the inner surface of the offset portion and the base plate.

The latch member includes first and second side face portions which extend substantially parallel to each other on either side thereof. The first and second guide projections face the first and second side face portion of the latch member, respectively, wherein the second guide projection is formed such that the second guide wall extends along the moving direction of the latch member.

Excessive play which occurs between the latch member and the guide projections prevents smooth operation of the known device.

It is an object of the invention to provide a reclining device, in which the latch member can smoothly slide without any excessive play between itself and the base plate.

Said object is achieved by a reclining device according to the present invention having the features of claim 1.

When the reclining device according to the invention is in a locked state, the latch member is pressed against the internal gear of the movable arm by the cam member, and the arm is fixed to the base plate, that is, a seat back is fixed, with the internal gear in engagement with the latch member. When the operating lever is operated in its unlocking direction, the rotary force of the lever is transmitted to the cam member to rotate it, whereupon the latch member moves to be disengaged from the internal gear. Thus, the movable arm is allowed to rotate relatively to the base plate. The latch member is held between the first and second guide projections as it moves along the guide walls.

According to the reclining device of the present invention constructed in this manner, the latch member and the cam member can be reduced in thickness and therefore, in weight, so that the whole device can be made compact, and the material cost can be lessened. Since the latch member and the cam member can be thinner than conventional ones, moreover, an external gear and other small modules can be easily formed by fine blanking. Further, a pressed portion formed on the base plate includes only the first and second guide projections that are small and simple in shape. Accordingly, the base plate can be formed into a desired shape by normal pressing without requiring any high-cost work, such as fine blanking.

According to an embodiment of the invention, the respective thicknesses of the latch member and the cam member may be substantially equivalent to the offset of the offset portion of the movable arm, and these members may be housed inside the offset portion. In this arrangement, the external gear of the latch member in the offset portion can be caused effectively to engage the internal gear of the offset portion throughout the gear thickness, and a superfluous thickness can be eliminated from a mating region between the external and internal gears.

According to a further embodiment of the invention, an auxiliary projection may be formed between the first and second guide projections and inserted in a hole formed in the latch member, in order to disperse load applied to the movable arm in case of a crash of a vehicle or the like to the base plate. In this arrangement, the strength of the reclining device to bear the load applied to the movable arm in case of a vehicle crash can be improved further.

According to a further embodiment of the invention, the guide projections and the auxiliary projection may be stamped out toward the offset portion of the movable arm and fitted entire in the offset portion of the movable arm. This arrangement is conducive to an additional reduction in thickness of the whole reclining device.

According to a further embodiment of the invention, the guide projections may be provided individually with wide portions in order to be improved in strength. In this arrangement, the strength of the guide projections can be further improved against the load applied to the movable arm in case of a vehicle crash, and the strength of the mating region between the internal gear and the latch member can be enhanced.

The reclining device according to a further embodiment of the invention may be designed so that the base plate has a pin provided at the lower portion thereof, the pin passing near the internal gear of the movable arm, being inserted in a hole in the operating lever, and having a collar portion with a outward form larger than the hole, on that part thereof which projects outward from the hole. In this arrangement, the base plate and the movable arm can be restrained from separating from each other by means of the collar on the pin and the operating lever. A peg for anchoring a return spring for the lever may be used as the pin. In this case, there is no need of additional use of a bracket that is essential to the conventional reclining devices. Therefore, the number of components used in this device cannot be increased, and an increase in weight is substantially negligible.

The reclining device of the invention is designed so that the latch member includes a first side face portion and a second side face portion extending substantially parallel to each other on either side thereof. In this case, the first guide projection facing the first side face portion is formed having the first guide wall inclined at an angle to the moving direction of the latch member, and the second guide projection facing the second side face portion is formed having the second guide wall extending along the moving direction of the latch member and a slanting wall continuous with the bottom of the second guide wall and inclined in the same direction as the first guide wall.

Thereby, the latch member is allowed to tilt at a certain degree, depending on the distance between the pair of guide projections and the width of the latch member. Also, the internal gear and the latch member can engage each other in a manner as the latch member is in contact with both the first and second guide projections. Even if there is any excessive play that is attributable to the dimensional tolerances of the base plate and the latch member, in this arrangement, a clearance between these two members in the locked state can be eliminated, so that the seat back can be prevented from vibrating.

This invention can be more fully understood from the following detailed description when taken in conjunction with the accompanying drawings, in which:
FIG: 1 is an exploded perspective view of a reclining device;
FIG. 2 is a front view, partially in section, showing a part of the reclining device of FIG. 1 which is not according to the invention;
FIG. 3 is a partial vertical sectional view of the reclining device of FIG. 1;
FIG. 4 is a partial front view showing a part of the reclining device of FIG. 1 in a locked state which is not according to the invention;
FIG. 5 is a front view, partially in section, showing a part of the reclining device of FIG. 1 in an unlocked state which is not according to the invention;
FIG. 6 is a perspective view of a further reclining device;
FIG. 7 is a perspective view of a pin used in the reclining device of FIG. 6;
FIG. 8 is a partial vertical sectional view of the reclining device of FIG. 6;
FIG. 9 is a front view showing a latch member and the like of a reclining device according to an embodiment of the invention;
FIG. 10A is a front view showing the latch member and the like in a state such that a clearance between the latch member and guide projections is the largest;
FIG. 10B is a front view showing an operation mode of the latch member in the reclining device shown in FIG. 10A;
FIG. 11A is a front view showing the latch member and the like in a state such that a clearance between the latch member and guide projections is the smallest;
FIG. 11B is a front view showing an operation mode of the latch member in the reclining device shown in FIG. 11;
FIG. 12 is an exploded perspective view of a conventional internal-gear reclining device;
FIG. 13 is a front view, partially in section, showing the reclining device of FIG. 12;
FIG. 14 is a partial vertical sectional view of the conventional reclining device shown in FIG. 12;
FIG. 15 is a perspective view of another conventional reclining device; and
FIG. 16 is a front view showing a conventional guide projection, latch member, etc.

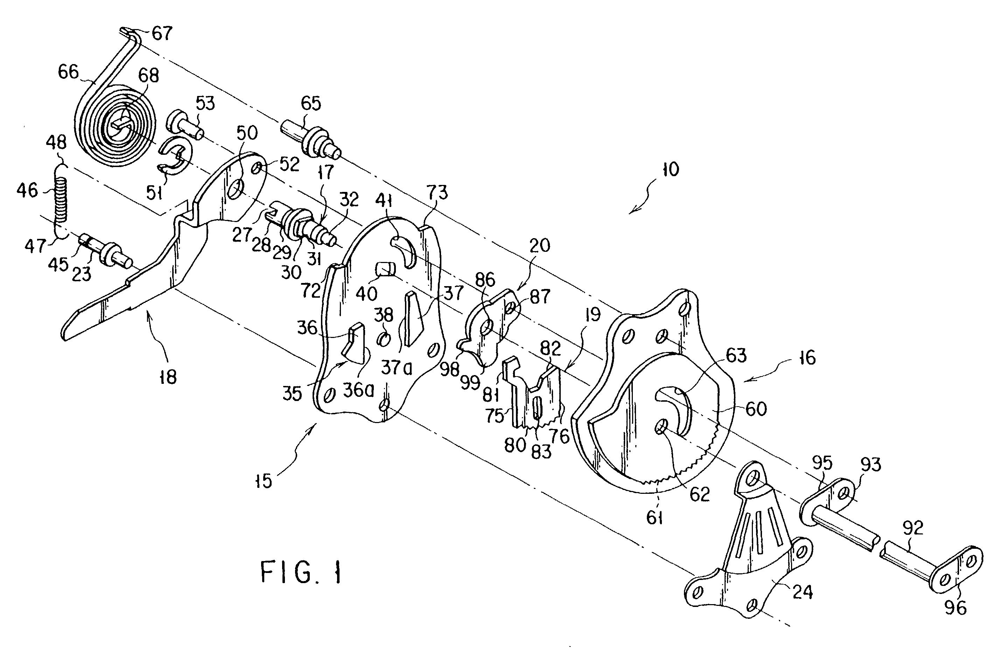

A reclining device 10 shown in FIG. 1 comprises a base plate 15 fixed to a seat frame of a seat of a vehicle such as an automobile, a movable arm 16 fixed to a seat-back frame of the seat and located adjacent to the plate 15, and a shaft 17 fixed to the base plate 15. The device 10 further comprises an operating lever 18 rotatably supported by the shaft 17, a latch member 19, a cam member 20, etc. A sub-plate 24 is fixed to the base plate 15 by means of a pin 23 or the like so that the arm 16 is interposed between the plates 15 and 24.

The shaft 17 is composed of a columnar end portion 28 having slit 27, snap ring mounting groove 29, portion 30 having a noncircular cross section, columnar intermediate body portion 31, terminal portion 32, etc.

The base plate 15 has a pressed portion 35 that is pressed so as to be convex on the right-hand side of FIG. 1. Thus, that part of the pressed portion 35 which faces the movable arm 16 has a convex shape. The pressed portion 35 includes a pair of guide projections 36 and 37 having vertical rectilinear guide walls 36a and 37a, respectively, and a circular auxiliary projection 38 situated between the projections 36 and 37.

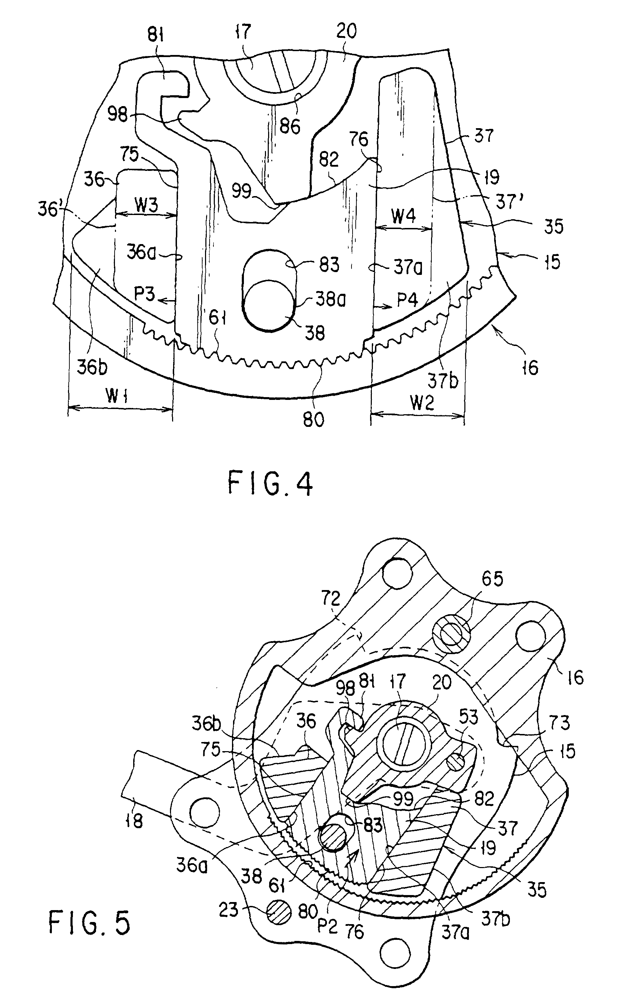

As shown in FIG. 4, the first guide projection 36 has the shape of a fan that spreads downward. More specifically, a wide portion 36b with a width W1 is provided on the lower end side of the first projection 36. The second guide projection 37 also has the shape of a fan that spreads downward. More specifically, a wide portion 37b with a width W2 is provided on the lower end side of the second projection 37. The guide projections 36 and 37 thus provided with the fan-shaped wide portions 36b and 37b, compared with vertically straight guide projections 36' and 37' (with widths W3 and W4), are considerably improved in strength to stand load (load in the directions indicated by arrows P3 and P4 in FIG. 4) that acts on a latch member 19 in case of a crash of the vehicle.

A noncircular shaft mounting hole 40 is formed in the upper portion of the base plate 15. A noncircular portion 30 of the shaft 17 is fixedly fitted in the hole 40. An arcuate slot 41 is formed centering around the mounting hole 40.

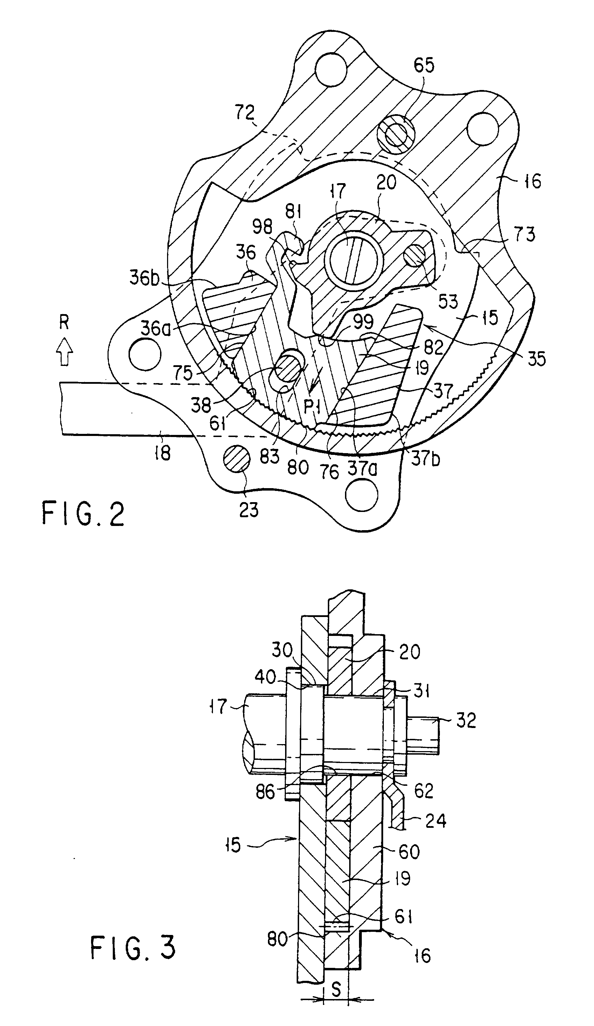

A spring retaining portion 45 is provided on an end portion of the pin 23, and one end 47 of a tension spring 46 is anchored to the retaining portion 45. The other end 48 of the spring 46 is anchored to the operating lever 18 so that the lever 18 is urged toward a locked position shown in FIG. 2 by means of the elastic force of the spring 46. Thus, the spring 46 functions as a return spring for the lever 18.

The operating lever 18 is rotatable around the shaft 17. More specifically, a circular hole 50 is formed in the proximal portion of the lever 18. The lever 18 is prevented from coming off the shaft 17 by fitting a snap ring 51, such as an E-ring, in the snap ring mounting groove 29 with the end portion 28 of the shaft 17 in the hole 50. A coupling pin 53 is passed through a hole 52 in the proximal portion of the lever 18. The pin 53 can be inserted into the arcuate slot 41 of the base plate 15.

The movable arm 16 is provided with an offset portion 60. The portion 60 is stamped out so as to be convex on the right-hand side of FIG. 1 by fine blanking. Thus, the offset portion 60 has a concave surface that faces the base plate 15. An internal gear 61 is formed on the lower end of the offset portion 60. The gear 61 is formed along a circular arc around a bearing hole 62. The hole 62 has a circular shape such that the intermediate body portion 31 of the shaft 17 can be rotatably inserted into the hole 62. An arcuate slot 63 is formed centering around the bearing hole 62.

Attached to the upper portion of the movable arm 16 is a retaining member 65 that doubles as a spring peg. An outer end 67 of a spiral spring 66 is anchored to the member 65. An inner end 68 of the spring 66 is fitted in a lit 27 of the shaft 17 so that the arm 16 is urged in the counterclockwise direction of FIG. 2 (in which the seat back is raised) by means of the repulsive load of the spring 66.

The retaining member 65 also serves to abut against a first stopper wall 72 of the base plate 15 when the movable arm 16 rotates forward through a given angle or to abut against a second stopper wall 73 when the arm 16 falls backward through a given angle, thereby regulating the range of rocking motion of the arm 16.

The latch member 19, cam member 20, and guide projections 36 and 37 are interposed between the base plate 15 and the movable arm 16, that is, housed in a space portion inside the offset portion 60 of the arm 16. The thickness of each of the members 19 and 20 is substantially equal to the gear thickness of the internal gear 61 of the movable arm 16, that is, an offset S (shown in FIG. 3) of the offset portion 60. Both the latch member 19 and the cam member 20 are formed by fine blanking.

The latch member 19 includes side face portions 75 and 76 arranged in substantially parallel straight lines that extend along the guide walls 36a and 37a, respectively. Thus, the latch member 19 can vertically move along the walls 36a and 37a of the guide projections 36 and 37. An external gear 80 that can engage the internal gear 61 is provided on the lower portion of the latch member 19. The external gear 81 is in mesh with the internal gear 61 across its thickness. A hook portion 81 and a slanting cam receiving surface 82 are provided on the upper side of the latch member 19.

A vertical slot 83 is formed in the latch member 19. The auxiliary projection 38 of the base plate 15 is inserted in the slot 83. As shown in FIG. 4, the projection 38 is formed in a position such that one side face 38a thereof, that is, the side on which load acts in case of a crash of the vehicle, can contact with the inner surface of the slot 83.

A through hole 86 is provided in the central portion of the cam member 20. The intermediate body portion 31 of the shaft 17 is inserted in the hole 86. A coupling pin 53 is inserted in a hole 87 that is formed in the end portion of the cam member 20. The pin 53 projects to the outside of the movable arm 16 through the arcuate slot 63 therein. A terminal part 93 of a coupling rod 92 can be connected the distal end portion of the pin 53. One end 95 of the rod 92 is rotatably supported by the terminal portion 32 of the shaft 17.

As shown in FIGS. 2 and 5 and other drawings, the cam member 20 is provided with a retaining portion 98, having a shape such that it can be caught by the hook portion 81 of the latch member 19, and a cam surface 99 shaped so as to be able to contact with the cam receiving surface 82. When the cam member 20 is in a locked position shown in FIG. 2, the cam member 20 pushes the latch member 19 in the direction of arrow P1 while being in contact with the surface 82 of the member 19, thereby pressing the external gear 80 against the internal gear 61.

The retaining portion 98 of cam member 20 has a shape such that it can pull up the latch member 19 in the direction of arrow P2 when the cam member 20 is rotated to an unlocked position shown in FIG. 5 or is rotated clockwise with the hook portion 81 of the latch member 19 caught thereby.

The following is a description of the operation of the reclining device 10 constructed in this manner.

In the locked state shown in FIG. 2, the latch member 19 is pressed toward the internal gear 61 by the cam member 20. The movable arm 16 is fixed to the base plate 15 with the internal and external gears 61 and 80 in engagement with each other. In this state, the seat back is fixed.

When the operating lever 18 is manually moved upward (in the direction indicated by arrow R in FIG. 2), a force (torque) applied to applied to the lever 18 is transmitted to the cam member 20 through the coupling pin 53, and the retaining portion 98 of the cam member 20 moves in the direction to pull up the hook portion 81 of the latch member 19. As shown in FIG. 5, therefore, the latch member 19 moves in the direction of arrow P2, whereupon the internal and external gears 61 and 80 are disengaged from each other. Consequently, the movable arm 16 is released from the constraint by the latch member 19, so that it is allowed to rotate relatively to base plate 15 around the shaft 17.

The above-described reclining device 10 is provided on one side of the seat. In the case of a bilateral-locking recliner, a second reclining device (not shown) that resembles the device 10 in construction is located on the other side of the seat. The respective cam members 20 (only one of which is shown) of these two reclining devices 10 are linked together by means of the coupling rod 92. Thus, the other end 96 of the rod 92 is connected to the second reclining device. In this case, a torque generated when the operating lever 18 is operated in the releasing direction is transmitted to the cam member (not shown) of the second reclining device by means of the coupling rod 92, as well as to the cam member 20 of the first reclining device 10. Thereupon, the latch member of the second reclining device is disengaged from the internal gear.

After the tilt angle of the seat back is adjusted in the aforesaid unlocked state, the operating lever 18 is released from the operating force. Thereupon, the lever 18 is returned to the position shown in FIG. 2 by means of the elastic force of the tension spring 46. As the cam member 20 then returns to the locked position in association with the lever 18, the external gear 80 of the latch member 19 engages the internal gear 61 of the movable arm 16, so that the arm 16 is fixed.

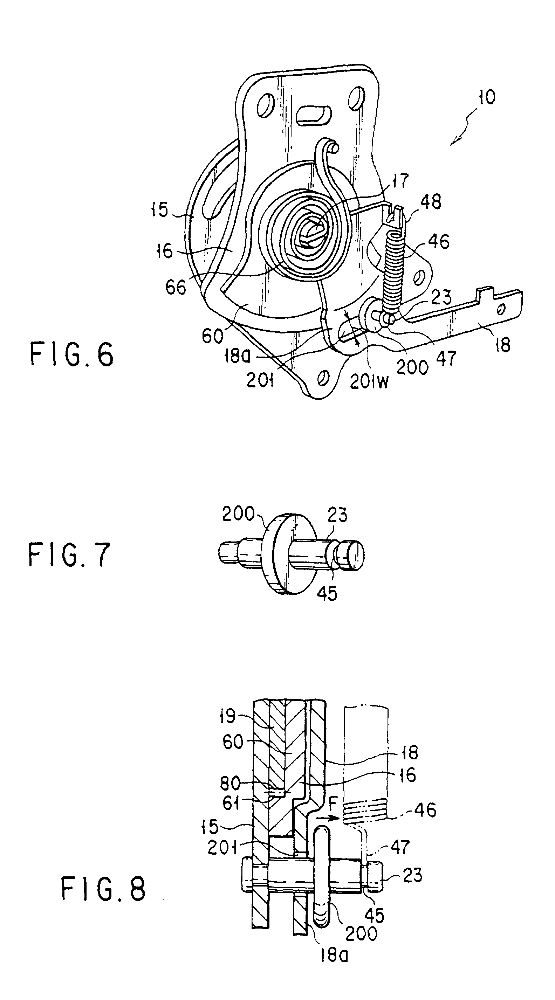

Referring now to FIGS. 6, 7 and 8, a further embodiment will be described. Since the construction and function of the further embodiment are basically the same as those of the preceding embodiment, like reference numerals are used to designate common portions throughout the views, and only differences between the two embodiments will be described below.

As shown in FIG. 6, a collar portion 200 is formed on a pin 23 on the lower portion of a base plate 15. As described before in connection with the first embodiment, the pin 23 supports one end 47 of a spring 46, and passes near an internal gear 61 of a movable arm 16. A wide portion 18a of an operating lever 18 is formed having a through hole 201 through which the pin 23 is passed. The hole 201 is designed as a slot having the shape of a circular arc around a shaft 17 lest it prevent the lever 18 from moving.

As shown in FIG. 7, the large-sized collar portion 200 is formed integrally with the pin 23. The portion 200 is located corresponding to an intermediate portion of the pin 23 in the axial direction thereof, that is, in a position where the pin 23 projects outward from the slot 201. The collar portion 200 has an outward form greater than a width 201w of the slot 201. As shown in FIG. 8, moreover, the movable arm 16 is situated between the operating lever 18 and the base plate 15.

The movable arm 16 comes into contact with the operating lever 18 when it is urged to separate (in the direction of arrow F in FIG. 8) from the base plate 15 by a torsional load that is generated in case of a crash. In this case, the lever 18 is restrained from moving in the direction of arrow F by the collar portion 200 of the pin 23. In consequence, the movable arm 16 can avoid separating from the base plate 15, and the strength of engagement between the internal gear 61 and the external gear 80 can be secured. Since the pin 23 is located near the position for the engagement between the internal and external gears 61 and 80, it is a very effective means for restraining the separation of the movable arm 16.

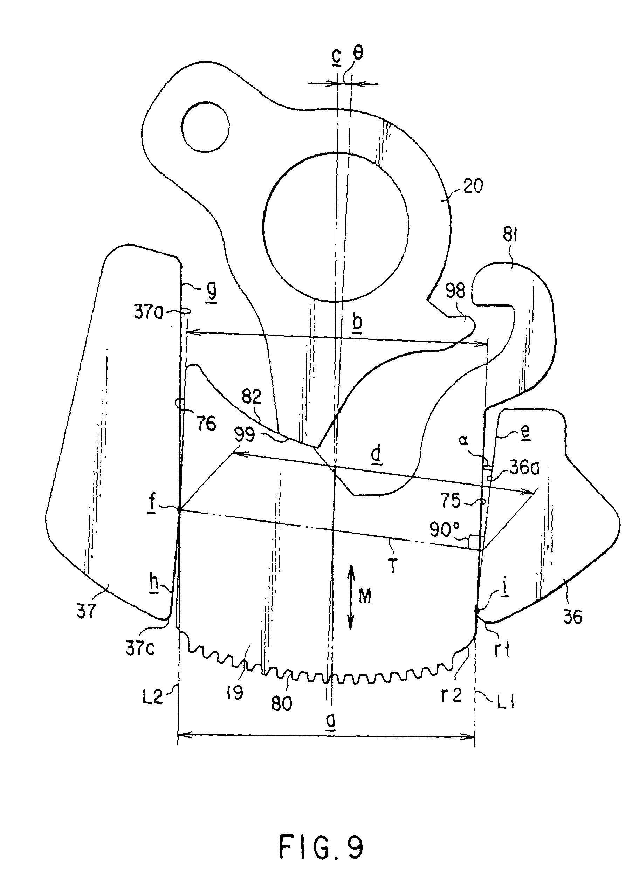

Referring now to FIG. 9, an embodiment of the present invention will be described. Since the construction and function of said embodiment are basically the same as those of the first mentioned embodiment, like reference numerals are used to designate common portions throughout the views, and only differences between the two embodiments will be described below.

In FIG. 9, a latch member 19 includes first and second side face portions 75 and 76 arranged substantially parallel to each other on either side thereof. A first guide projection 36 that faces the first side face portion 75 is formed having a first guide wall 36a, which is inclined at an angle to the moving direction (vertical direction indicated by arrow M in FIG. 9) of the latch member 19. More specifically, the first guide wall 36a is in the form of a slope that is inclined in the longitudinal direction with respect to the first side face portion 75 so that its lower part projects ahead of its lower part. A circular arc r1 is formed at the lower end portion of the guide wall 36a.

A second guide projection 37 that faces the second side face portion 76 is formed having a second guide wall 37a, which extends straight along the moving direction M of the latch member 19, and a slanting wall 37c that is continuous with the bottom of the wall 37a and is inclined in the same direction as the first guide wall 36a.

A distance a between the first and second guide projections 36 and 37 is equal to a horizontal dimension between a segment L1, which passes through an end of the circular arc r1 at the lower end portion of the first guide wall 36a and extends parallel to a center line C, and an extension of L2 of a segment g that extends along the second guide wall 37a. This distance a is shorter than a width b (latch width) of the latch member 19. Symbol e designates a segment that extends along the first guide wall 36a. An intersecting point f exists in a position where a segment h along the slanting wall 37c and the segment g intersect each other. A substantial minimum distance d between the pair of guide projections 36 and 37 is equal to the length of a line T perpendicular to the segment e that passes through the intersecting point f.

If the minimum distance d between the guide projections 36 and 37 is longer than the latch width b, in this case, the latch member 19 can tilt in the longitudinal direction around the intersecting point f. The respective tilt angles of the segments e and h to the latch member moving direction M are wider than a tilt angle θ of the latch member 19.

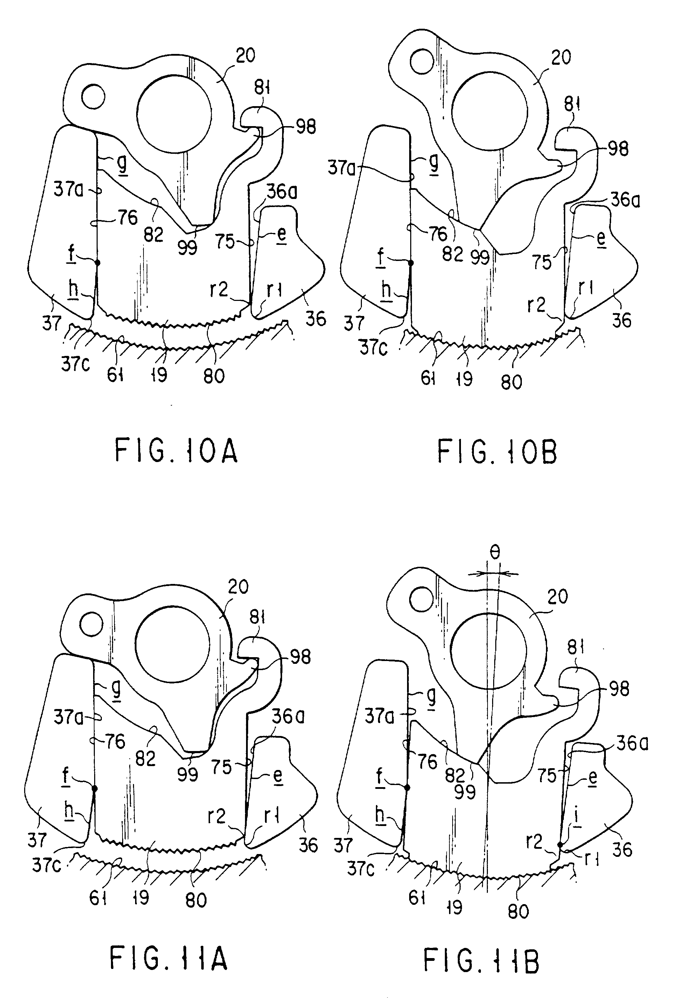

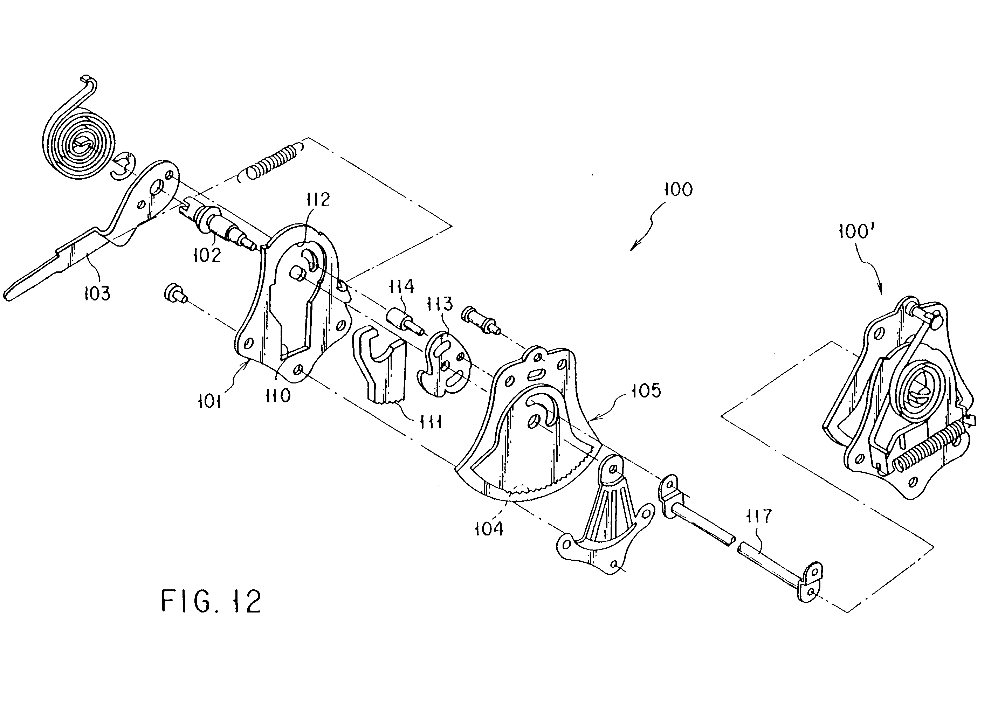

FIGS. 10A and 10B both show a case where the distance a between the first and second guide projections 36 and 37 is set with a maximum tolerance and the latch width b with a minimum tolerance, that is, where a clearance between the projections 36 and 37 and the latch member 19 is the largest. On the other hand, FIGS. 11A and 11B show a case where the distance between the guide projections 36 and 37 is set with a minimum tolerance and the latch width b with a maximum tolerance, that is, where the clearance is the smallest.

As the latch member 19 moves from the unlocked position shown in FIG. 10A to the locked position shown in FIG. 10B with the largest clearance, it descends along the second guide wall 37a (segment g). The movable arm 16 is locked when the internal and external gears 61 and 80 engage each other with the member 19 in contact with the second guide wall 37a and the arcuate surface r1.

As the latch member 19 moves from the unlocked position shown in FIG. 11A to the locked position shown in FIG. 11B with the smallest clearance, it first descends along the second guide wall 37a (segment g). Thereafter, an arcuate surface r2 at the lower end of the first side face portion 75 of the member 19 meets the first guide wall 36a (segment e). In this case, the latch member 19 further moves downward while inclining around the intersecting point f in a direction such that an angle α (shown in FIG. 9) between the first guide wall 36a and the member 19 narrows. The latch member 19 is locked when the internal and external gears 61 and 80 engage each other with the member 19 in contact with both a point i on the arcuate surface r1 at the lower end of the first guide wall 36a and the intersecting point f.

Thus, the latch member 19 can always be supported at two points by means of the guide projections 36 and 37 without regard to the size of the clearance, maximum or minimum. In consequence, formation of the clearance between the projections 36 and 37 and the latch member 19, which may possibly cause excessive play, can be avoided during the locking operation.

## Claims

1. A reclining device comprising a base plate (15), a horizontal shaft (17) provided on the base plate (15), a movable arm (16) located adjacent to the base plate (15), rotatable around the shaft (17), and having an internal gear (61), a latch member (19) movable between a locked position in which the latch member (19) is in engagement with the internal gear (61) and an unlocked position in which the latch member (19) is disengaged from the internal gear (61), a cam member (20) having a shape such as to be able to drive the latch member (19) between the locked position and the unlocked position, and an operating lever (18) for rotating the cam member (20),
wherein the base plate (15) includes a first guide projection (36) and a second guide projection (37) projecting in the thickness direction thereof, the guide projections (36, 37) having opposite guide walls (36a, 37a), individually,
the movable arm (16) includes an offset portion (60) recessed in the thickness direction thereof,
the guide projections (36, 37) get into the offset portion (60) with the base plate (15) and the movable arm (16) joined together,
the latch member (19) is held between the inner surface of the offset portion (60) and the base plate (15) and is movable along the guide walls (36a, 37a) between the locked position and the unlocked position, and
the cam member (20) is also held between the inner surface of the offset portion (60) and the base plate (15),
wherein said latch member (19) includes a first side face portion (75) and a second side face portion (76) extending substantially parallel to each other on either side thereof, said first guide projection (36) facing the first side face portion (75) is formed such that the first guide wall (36a) is inclined in the longitudinal direction with respect to the first side face portion (75), said second guide projection (37) facing the second side face portion (76) is formed such that the second guide wall (37a) extends along the moving direction of the latch member (19), a slanting wall (37c) of the second guide projection (37) is continuous with the bottom of the second guide wall (37a) and is inclined in the same direction as the first guide wall (36a), and a point (f) between the second guide wall (37a) and the slanting wall (37c) is in contact with the second side face portion (76) of the latch member (19).

2. A reclining device according to claim 1, **characterised in that** the respective thicknesses of said latch member (19) and said cam member (20) are substantially equivalent to the offset of the offset portion (60) of the movable arm (16).

3. A reclining device according to claim 1, **characterised in that** said base plate (15) has an auxiliary projection (38) formed between the first and second guide projections (36, 37) and inserted in a hole (83) formed in the latch member (19).

4. A reclining device according to claim 3, **characterised in that** said guide projections (36, 37) and said auxiliary projection (38) are fitted in the offset portion (60) of the movable arm (16).

5. A reclining device according to claim 1, **characterised in that** said guide projections (36, 37) are provided individually with wide portions (36b,37b) spread toward the internal gear (61).

6. A reclining device according to claim 1, **characterised in that** said base plate (15) has a pin (23) provided at the lower portion thereof, the pin (23) passing near the internal gear (61) of the movable arm (16), being inserted in a hole (201) in the operating lever (18), and having a collar portion with an outward form larger than the hole (201), on that part thereof which projects outward from the hole (201).

## Patentansprüche

1. Verstellvorrichtung, die eine Grundplatte (15), eine horizontale Welle (17), die an der Grundplatte (15) vorhanden ist, einen beweglichen Arm (16), der an die Grundplatte (15) angrenzend angeordnet ist und um die Welle (17) gedreht werden kann und ein Innenzahnrad (61) aufweist, ein Riegelelement (19), das zwischen einer arretierten Position, in der das Riegelelement (19) in Eingriff mit dem Innenzahnrad (61) ist, und einer entarretierten Position bewegt werden kann, in der das Riegelelement (19) von dem Innenzahnrad (61) gelöst ist, ein Nockenelement (20), das so geformt ist, dass es in der Lage ist, das Riegelelement (19) zwischen der arretierten Position und der entarretierten Position zu bewegen, und einen Bedienhebel (18) zum Drehen des Nockenelementes (20) umfasst,
wobei
die Grundplatte (15) einen ersten Führungsvorsprung (36) und einen zweiten Führungsvorsprung (37) enthält, die in der Dickenrichtung derselben vorstehen, und die Führungsvorsprünge (36, 37) jeweils einander gegenüberliegende Führungswände (36a, 37a) haben,
der bewegliche Arm (16) einen Versatzabschnitt (60) enthält, der in der Dickenrichtung desselben zurückgesetzt ist,
die Führungsvorsprünge (36, 37) in den Versatzabschnitt (60) gelangen, wenn die Grundplatte (15) und der bewegliche Arm (16) miteinander verbunden sind,
das Riegelelement (19) zwischen der Innenfläche des Versatzabschnitts (60) und der Grundplatte (15) aufgenommen wird und an den Führungswänden (36a, 37a) zwischen der arretierten Position und der entarretierten Position entlangbewegt werden kann, und
das Nockenelement (20) ebenfalls zwischen der Innenfläche des Versatzabschnitts (60) und der Grundplatte (15) aufgenommen wird,
wobei das Riegelelement (19) einen ersten Seitenflächenabschnitt (75) und einen zweiten Seitenflächenabschnitt (76) enthält, die sich im Wesentlichen parallel zueinander auf beiden Seiten desselben erstrecken, der erste Führungsabschnitt (36), der dem ersten Seitenflächenabschnitt (75) zugewandt ist, so ausgebildet ist, dass die erste Führungswand (36a) in der Längsrichtung in Bezug auf den ersten Seitenflächenabschnitt (75) geneigt ist, der zweite Führungsvorsprung (37), der dem zweiten Seitenflächenabschnitt (76) zugewandt ist, so ausgebildet ist, dass sich die zweite Führungswand (37a) entlang der Bewegungsrichtung des Riegelelementes (19) erstreckt, eine geneigte Wand (37c) des zweiten Führungsvorsprungs (37) sich an das untere Ende der zweiten Führungswand (37a) anschließt und in der gleichen Richtung geneigt ist wie die erste Führungswand (36a) und ein Punkt (f) zwischen der zweiten Führungswand (37a) und der geneigten Wand (37c) in Kontakt mit dem zweiten Seitenflächenabschnitt (76) des Riegelelementes (19) ist.

2. Verstellvorrichtung nach Anspruch 1, **dadurch gekennzeichnet, dass** die jeweiligen Dicken des Riegelelementes (19) und des Nockenelementes (20) im Wesentlichen äquivalent zu dem Versatz des Versatzabschnittes (60) des beweglichen Arms (16) sind.

3. Verstellvorrichtung nach Anspruch 1, **dadurch gekennzeichnet, dass** die Grundplatte (15) einen Zusatzvorsprung (38) hat, der zwischen dem ersten und dem zweiten Führungsvorsprung (36, 37) ausgebildet und in ein Loch (83) eingeführt ist, das in dem Riegelelement (19) ausgebildet ist.

4. Verstellvorrichtung nach Anspruch 3, **dadurch gekennzeichnet, dass** die Führungsvorsprünge (36, 37) und der Zusatzvorsprung (38) in den Versatzabschnitt (60) des beweglichen Arms (16) eingepasst sind.

5. Verstellvorrichtung nach Anspruch 1, **dadurch gekennzeichnet, dass** die Führungsvorsprünge (36, 37) jeweils mit breiten Abschnitten (36b, 37b) versehen sind, die sich auf das Innenzahnrad (61) zu ausbreiten.

6. Verstellvorrichtung nach Anspruch 1, **dadurch gekennzeichnet, dass** die Grundplatte (15) einen Zapfen (23) hat, der am unteren Endabschnitt desselben vorhanden ist, wobei der Zapfen (23) nahe an dem Innenzahnrad (61) des beweglichen Arms (16) läuft und in ein Loch (201) in dem Bedienhebel (18) eingeführt ist und einen Bundabschnitt an dem Teil, der aus dem Loch (201) nach außen vorsteht, mit einer äußeren Form aufweist, die größer ist als das Loch (201).

## Revendications

1. Un dispositif d'inclinaison, comprenant une plaque de base (15), un arbre (17) horizontal prévu sur la plaque de base (15), un bras mobile (16), placé de façon adjacente à la plaque de base (15), susceptible de tourner autour de l'arbre (17) et ayant une couronne à denture intérieure (61), un organe de verrouillage (19), déplaçable entre une position verrouillée, à laquelle l'organe de verrouillage (19) est engrené avec la couronne à denture intérieure (61), et une position déverrouillée, à laquelle l'organe de verrouillage (19) est dégagé de la couronne à denture intérieure (61), un organe formant came (20), d'une forme permettant d'entraîner l'organe de verrouillage (19) entre la position verrouillée et la position déverrouillée, et un levier d'actionnement (18), pour faire tourner l'organe formant came (20),
dans lequel la plaque de base (15) comprend une première saillie de guidage (36) et une deuxième saillie de guidage (37), se projetant dans la direction de l'épaisseur de celle-ci, les saillies de guidage (36, 37) ayant des parois de guidage (36a, 37a) opposées, individuellement,
le bras mobile (16) comprenant une partie décalée (60) creusée dans la direction de son épaisseur,
les saillies de guidage (36, 37) passant à l'intérieur de la partie décalée (60), la plaque de base (15) et le bras mobile (16) étant reliés ensemble,
l'organe de verrouillage (19) est maintenu, entre la surface intérieure de la partie décalée (60) et la plaque de base (15), et est déplaçable le long des parois de guidage (36a, 37a), entre la position verrouillée et la position déverrouillée, et
l'organe formant came (20) est également maintenu, entre la surface intérieure de la partie décalée (60) et la plaque de base (15),
dans lequel ledit organe de verrouillage (19) comprend une première partie de face latérale (75) et une deuxième partie de face latérale (76), s'étendant sensiblement parallèlement l'une à l'autre de chaque côté de celui-ci, ladite première saillie de guidage (36), qui est tournée vers la première partie de face latérale (75), est formée de manière que la première paroi de guidage (36a) soit inclinée en direction longitudinale par rapport à la première partie de face latérale (75), ladite deuxième saillie de guidage (37), qui est tournée vers la deuxième partie de face latérale (76), est formée de manière que la deuxième paroi de guidage (37a) s'étende le long de la direction de déplacement de l'organe de verrouillage (19), une paroi d'inclinaison (37c) de la deuxième saillie de guidage (37) est continue avec le fond de la deuxième paroi de guidage (37a) et est inclinée dans la même direction que la première paroi de guidage (36a), et un point (f), entre la deuxième paroi de guidage (37a) et la paroi d'inclinaison (37c), est en contact avec la deuxième partie de face latérale (76) de l'organe de verrouillage (19).

2. Un dispositif d'inclinaison selon la revendication 1, **caractérisé en ce que** les épaisseurs respectives dudit organe de verrouillage (19) et dudit organe formant came (20) sont sensiblement équivalentes au décalage de la partie décalée (60) du bras mobile (16).

3. Un dispositif d'inclinaison selon la revendication 1, **caractérisé en ce que** ladite plaque de base (15) présente une saillie auxiliaire (38), formée entre les première et deuxième saillie de guidage (36, 37) et insérée dans un trou (83) formé dans l'organe de verrouillage (19).

4. Un dispositif d'inclinaison selon la revendication 3, **caractérisé en ce que** lesdites saillies de guidage (36, 37) et ladite saillie auxiliaire (38) sont montées dans la partie décalée (60) du bras mobile (16).

5. Un dispositif d'inclinaison selon la revendication 1, **caractérisé en ce que** lesdites saillies de guidage (36, 37) sont munies individuellement de parties larges (36b, 37b), évoluant en direction de la couronne à denture intérieure (61).

6. Un dispositif d'inclinaison selon la revendication 1, **caractérisé en ce que** ladite plaque de base (15) comprend un téton (23) prévu à sa partie inférieure, le téton (23) passant à proximité de la couronne à denture intérieure (61) du bras mobile (16), étant inséré dans un trou (201), ménagé dans le levier d'actionnement (18), et ayant une partie formant collerette présentant une forme extérieure plus grande que le trou (201), sur sa partie qui est en saillie vers l'extérieur depuis le trou (201).
